# EUROPÄISCHE PATENTSCHRIFT

(11) **EP 1 683 263 B1**
(45) Veröffentlichungstag und Bekanntmachung des Hinweises auf die Patenterteilung: **29.08.2007**
(21) Anmeldenummer: 04818155.6
(22) Anmeldetag: 04.11.2004
(51) Int. Cl.: H02P 7/00, H02P 6/16, G01D 5/244

(54) **VERFAHREN ZUM BETRIEB EINER SYNCHRONMASCHINE**
METHOD FOR OPERATING A SYNCHRONOUS MACHINE
PROCEDE PERMETTANT DE FAIRE FONCTIONNER UNE MACHINE SYNCHRONE

(30) Priorität: 06.11.2003 DE 10351849
(43) Veröffentlichungstag der Anmeldung: 26.07.2006
(73) Patentinhaber: Continental Teves AG & Co. oHG, 60488 Frankfurt am Main (DE)
(72) Erfinder: MARON, Christof, 65779 Kelkheim (DE); STAUDER, Peter, 55128 Mainz (DE); KAUFMANN, Tom, 55595 Winterbach (DE)
(86) Internationale Anmeldenummer: PCT/EP2004/052802
(87) Internationale Veröffentlichungsnummer: WO 2005/046041

(56) Entgegenhaltungen:
- DE-A1- 10 311 028
- US-A- 3 845 378
- US-A1- 2002 138 177

## Beschreibung

Die vorliegende Erfindung betrifft ein Verfahren zum Betrieb einer Synchronmaschine mit einem permanent erregten Rotor und einem mit Phasenwicklungen versehenen Stator, bei der eine Ermittlung der Rotorlage durchgeführt wird. Außerdem betrifft die vorliegende Erfindung ein Verfahren zum Betrieb einer Synchronmaschine mit einem permanent erregten Rotor und einem mit Phasenwicklungen versehenen Stator, die mit einer Ansteuerelektronikeinheit, die einen Datenspeicher für Rotorlagenwerte aufweist, verbunden ist, wobei ein Auslesen des im Datenspeicher gespeicherten Rotorlagenwertes durchgeführt wird.

Aus der Offenlegungsschrift DE 103 11 028 A1 ist ein Verfahren zur Bestimmung einer Startrotorlage und Drehzahl bei Impulsfreigabe einer stromrichtergespeisten, permanent erregten Synchronmaschine ohne Lage- und Drehzahlgeber bekannt. Bei dem vorbekannten Verfahren wird zunächst die Rotorlage nach dem Start der Synchronmaschine ermittelt, wobei dieser Vorgang nach einer vorbestimmten Zeitspanne wiederholt wird. Zusätzlich wird dabei die Drehzahl der Synchronmaschine ermittelt. Bei der Ermittlung der Rotorlage kann es allerdings zu Fehlern kommen, die im gesamten weiteren Betrieb der Synchronmaschine auftreten, da keine Überprüfung der ermittelten Rotorlagenwerte vorgesehen ist, was als weniger vorteilhaft anzusehen ist.

Eine erste Aufgabe der vorliegenden Erfindung ist es daher, ein Verfahren darzustellen, das Fehler und insbesondere Winkelfehler bei der Ermittlung der Rotorlage eliminiert. Eine zweite Aufgabe der vorliegenden Erfindung besteht darin, ein Verfahren darzustellen, das Fehler und insbesondere Winkelfehler des gespeicherten Rotorlagenwertes eliminiert.

Die erste Aufgabe wird verfahrensmäßig dadurch gelöst, dass zur Korrektur eines etwaigen Winkelfehlers bei lastloser Synchronmaschine in die Phasenwicklungen mindestens ein Strom- und/oder Spannungsvektor mit definierter Zeitdauer in Richtung der ermittelten Rotorlage eingespeist wird. Dadurch wird eine Ausrichtung des Rotors der Synchronmaschine in die entsprechende Winkellage erzwungen.

Eine besonders vorteilhafte Weiterbildung sieht vor, dass zeitgleich zur Einspeisung des mindestens einen Spannungs- oder Stromvektors, die relative Änderung der Rotorlage mit einem Sensorelement bestimmt wird.

Eine weitere vorteilhafte Weiterbildung besteht darin, dass die relative Änderung bei einer weiteren Ermittlung der Rotorlage berücksichtigt wird.

Bei der Ermittlung der Rotorlage werden an die Phasenwicklungen rechteckförmige Spannungsimpulse angelegt. Dabei ist vorgesehen, dass zeitgleich zum Anlegen der rechteckförmigen Spannungsimpulse eine etwaige relative Änderung der Rotorlage mit einem Sensorelement bestimmt wird.

Bei einer besonders vorteilhaften Ausführung ist vorgesehen, dass weitere Strom- und/oder Spannungsvektoren in von der aktuellen Rotorlage abweichenden Winkel eingespeist werden und dass das Maß der relativen Änderung der Rotorlage als Kriterium für die Beurteilung der Freigängigkeit (Lastlosigkeit) der Synchronmaschine verwendet wird.

Eine weitere vorteilhafte Weiterbildung des erfindungsgemäßen Verfahrens sieht vor, dass der sich durch das Anlegen des Spannungsvektors einstellende Stromvektor mit Hilfe einer Strommesseinrichtung ermittelt wird und als Kriterium für die Beurteilung des Zustandes der elektrischen Anschlüsse der Phasenwicklungen verwendet wird.

Die zweite Aufgabe der vorliegenden Erfindung wird verfahrensmäßig dadurch gelöst, dass zur Korrektur eines etwaigen Winkelfehlers bei lastloser Synchronmaschine in die Phasenwicklungen mindestens ein Strom- und/oder Spannungsvektor mit definierter Zeitdauer in Richtung der gespeicherten Rotorlage eingespeist wird. Durch diese Maßnahme wird eine Ausrichtung des Rotors der Synchronmaschine in die entsprechende Winkellage erzwungen.

Dabei ist vorgesehen, dass vor dem Auslesen des im Datenspeicher gespeicherten Rotorlagenwertes überprüft wird, ob der Rotor seit der letzten Speicherung des Rotorlagenwertes mit einer Verdrehsicherung gegen Verdrehen gesichert war.

Bei einer vorteilhaften Weiterbildung wird zeitgleich zur Einspeisung des mindestens einen Spannungs- oder Stromvektors, die relative Änderung der Rotorlage mit einem Sensorelement bestimmt und das Maß der relativen Änderung der Rotorlage als Kriterium für die Qualität der gespeicherten Rotorlagenwerte verwendet.

Außerdem ist vorgesehen, dass der sich durch das Anlegen des Spannungsvektors einstellende Stromvektor mit Hilfe einer Strommesseinrichtung ermittelt wird und als Kriterium für die Beurteilung des Zustandes des elektrischen Anschlusses der Phasenwicklungen verwendet wird.

Die Erfindung wird nachfolgend im Zusammenhang mit der beiliegenden Zeichnung näher erläutert, deren einzige Figur ein Blockschaltbild einer Vorrichtung zur Durchführung der vorhin erläuterten, erfindungsgemäßen Verfahren zeigt.

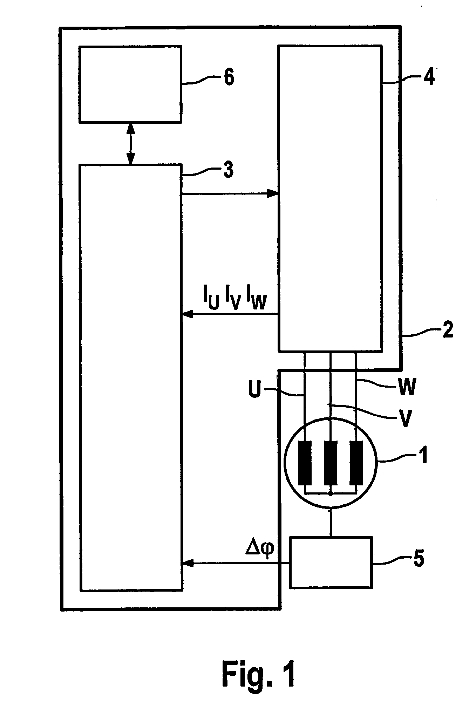

Die in Fig. 1 dargestellte Synchronmaschine 1 weist einen Stator auf, der mit einer symmetrischen, zweipoligen und dreisträngigen Drehstromwicklung versehen ist. Ein mit dem Stator zusammenwirkender Rotor wird durch einen Permanentmagneten gebildet. Außerdem ist der Synchronmaschine 1 eine Ansteuerelektronikeinheit 2 zugeordnet, die einen Datenspeicher 6 für Rotorlagenwerte und weitere Speicherwerte, wie etwa Regler- und Maschinenparameter, aufweist. Die Ansteuerungselektronikeinheit 2 weist ein Ansteuerungssoftwaremodul 3 sowie eine Leistungsendstufe 4, in die eine Strommesseinrichtung integriert ist, auf. Dabei werden die Spannungssignale der Leistungsendstufe 4 an die Phasenwicklungen U, V und W der Synchronmaschine 1 angelegt. Dem eben erwähnten Ansteuerungssoftwaremodul 3 werden die eine Rotorlageänderung der Synchronmaschine 1 repräsentierenden Ausgangssignale Δϕ eines relativen Rotorlagesensors 5 zugeführt.

Bei bisher bekannten Verfahren zur Ermittlung der Rotorlage werden die Rotorlagenwerte nicht auf ihre Richtigkeit überprüft und der weitere Betrieb der Synchronmaschine 1 mit den mit Unsicherheiten behafteten Rotorlagewerten fortgesetzt. Gemäß dem vorliegenden erfindungsgemäßen Verfahren wird nun vorgeschlagen, dass nach einer Ermittlung der Rotorlage bei lastloser Synchronmaschine 1 von der Leistungsendstufe 4 mindestens ein Strom- oder Spannungsvektor in Richtung der ermittelten Rotorlage in die Phasenwicklungen U, V und W eingespeist wird. Durch diese Maßnahme wird eine Ausrichtung des Rotors in die durch den eingespeisten Strom- bzw. Spannungsvektor vorgegebene Winkellage durchgeführt. Dadurch ist sichergestellt, dass sich der Rotor in der zuvor ermittelten Winkellage befindet. Zeitgleich zur eben beschriebenen Einspeisung eines Strom- oder Spannungsvektors erfasst der relative Rotorlagesensor 5 die während der Ausrichtung vollzogene relative Änderung der Rotorlage, falls die ermittelte Rotorlage von der tatsächlichen Rotorlage abweichen sollte. Diese relative Änderung Δϕ der Rotorlage wird dem Ansteuemittlung der Rotorlage zugeführt und bei einer weiteren Ermittlung der Rotorlage berücksichtigt, indem die relative Änderung Δϕ in eine Korrekturfunktion einfließt. Diese Korrekturfunktion wird bei einer erneuten Ermittlung der Rotorlage auf die ermittelten Rotorlagenwerte angewendet. Durch diese Maßnahme kann eine weitere Rotorlagenermittlung mit erhöhter Präzision durchgeführt werden.

Bei der eben erwähnten Ermittlung der Rotorlage wird die durch die Rotorbewegungen verursachte Induktivitätsänderung der Phasenwicklungen U, V und W bestimmt. Dies erfolgt, indem rechteckförmige Spannungsimpulse an die Phasenwicklungen U, V und W angelegt werden. Gleichzeitig wird der Verlauf des durch die Phasenwicklungen U, V und W fließenden Stroms I_{U}, I_{V} und I_{W} von der Strommesseinrichtung in der Leistungsendstufe 4 ermittelt und dem Ansteuerungssoftwaremodul 3 zugeführt. Der Stromverlauf I_{U}, I_{V} und I_{W} lässt auf die Position des Rotors schließen. Verändert sich die Position des Rotors, so ändert sich auch der Verlauf des durch die Phasenwicklungen fließenden Stroms. Zusätzlich wird zeitgleich zum Anlegen der rechteckförmigen Spannungsimpulse eine etwaige relative Änderung der Rotorlage mit dem relativen Rotorlagesensor 5 erfasst und ebenfalls dem Ansteuerungssoftwaremodul 3 zugeführt.

Von der Leistungsendstufe 4 werden weitere Strom- bzw. Spannungsvektoren in von der ermittelten Rotorlage abweichenden Winkeln in die Phasenwicklungen U, V und W der Synchronmaschine 1 eingespeist, wenn die Synchronmaschine 1 lastlos ist, das heißt wenn sich die Synchronmaschine 1 im Stillstand befindet. Gleichzeitig wird die relative Änderung der Rotorlage durch den relativen Rotorlagesensor 5 bestimmt. Dabei ist das Maß der relativen Änderung der Rotorlage ein Kriterium für die Freigängigkeit der Synchronmaschine 1.

Außerdem wird der Zustand der elektrischen Anschlüsse der Phasenwicklüngen U, V und W der Synchronmaschine 1 beurteilt. Dies geschieht, indem der sich durch das Anlegen des Spannungsvektors einstellende Stromvektor mit Hilfe der Strommesseinrichtung in der Leistungsendstufe 4 ermittelt wird. Falls der ermittelte Stromvektor eine andere Winkellage als der eingespeiste Spannungsvektor aufweist, ist davon auszugehen, dass mindestens einer der elektrischen Anschlüsse der Phasenwicklungen U, V und W nicht funktionstüchtig ist. Außerdem wird über den Betrag des Stromvektors der elektrische Widerstand in den Phasenwicklungen U, V und W ermittelt.

Falls keine Ermittlung der Rotorlage vorgesehen ist, sondern der Betrieb der Synchronmaschine 1 mit Hilfe von im Datenspeicher 6 der Ansteuerelektronikeinheit 2 gespeicherten Rotorlagenwerte durchgeführt wird, so sieht ein weiteres Verfahren der vorliegenden Erfindung vor, dass mindestens ein Strom- bzw. Spannungsvektor mit definierter Zeitdauer in Richtung der gespeicherten Rotorlage in die Phasenwicklungen U, V und W eingespeist wird. Dadurch wird eine Ausrichtung des Rotors in die durch den eingespeisten Strom- bzw. Spannungsvektor vorgegebene Winkellage durchgeführt und es ist sichergestellt, dass sich der Rotor tatsächlich in der gespeicherten Winkellage befindet. Falls der gespeicherte Rotorlagenwert von der tatsächlichen Rotorlage abweichen sollte, so erfasst der relative Rotorlagesensor 5 die während der Ausrichtung vollzogene relative Änderung der Rotorlage zeitgleich zur eben beschriebenen Einspeisung eines Strom- oder Spannungsvektors. Diese relative Änderung Δϕ der Rotorlage wird dem Ansteuerungssoftwaremodul 3 zugeführt und ist ein Kriterium für die Qualität der im Datenspeicher 6 der Ansteuerelektronikeinheit 2 gespeicherten Rotorlagenwerte. Außerdem ist die relative Änderung Δϕ ein Kriterium für die Qualität aller im Datenspeicher 6 gespeicherten Speicherwerte, wie Regler- und Maschinenparameter.

Eine weitere Verbesserung der sicheren Inbetriebnahme der Synchronmaschine 1 besteht darin, dass vor dem Auslesen des im Datenspeicher 6 der Ansteuerelektronikeinheit 2 gespeicherten Rotorlagenwertes überprüft wird, ob der Rotor seit der letzten Speicherung des Rotorlagenwertes mit einer Verdrehsicherung gegen Verdrehen gesichert war. In diesem Fall wird erwartet, dass ein Einspeisen eines Strom- bzw. Spannungsvektors in Richtung der gespeicherten Rotorlage keine relative Lageänderung des Rotors zur Folge hat. Dies wird, wie bereits beschrieben, mit dem relativen Rotorlagesensor 5 ermittelt.

Auch bei diesem Verfahren wird der Zustand der elektrischen Anschlüsse der Phasenwicklungen U, V und W der Synchronmaschine 1 beurteilt. Der sich durch das Anlegen des Spannungsvektors einstellende Stromvektor wird dabei mit Hilfe der Strommesseinrichtung in der Leistungsendstufe 4 ermittelt. Falls der ermittelte Stromvektor eine andere Winkellage als der eingespeiste Spannungsvektor aufweist, ist davon auszugehen, dass mindestens eine der Phasenwicklungen U, V und W nicht an die Leistungsendstufe 4 angeschlossen ist. Außerdem wird über den Betrag des Stromvektors der elektrische Widerstand in den Phasenwicklungen U, V und W ermittelt.

## Patentansprüche

1. Verfahren zum Betrieb einer Synchronmaschine (1) mit einem permanent erregten Rotor und einem mit Phasenwicklungen versehenen Stator, bei der eine Ermittlung der Rotorlage durchgeführt wird, **dadurch gekennzeichnet, dass** zur Korrektur eines etwaigen Winkelfehlers bei lastloser Synchronmaschine (1) in die Phasenwicklungen mindestens ein Strom- und/oder Spannungsvektor mit definierter Zeitdauer in Richtung der ermittelten Rotorlage eingespeist wird.

2. Verfahren nach Anspruch 1, **dadurch gekennzeichnet, dass** zeitgleich zur Einspeisung des mindestens einen Spannungs- oder Stromvektors, die relative Änderung der Rotorlage mit einem Sensorelement (5) bestimmt wird.

3. Verfahren nach Anspruch 2, **dadurch gekennzeichnet, dass** die relative Änderung bei einer weiteren Ermittlung der Rotorlage berücksichtigt wird.

4. Verfahren nach einem der Ansprüche 1 bis 3, **dadurch gekennzeichnet, dass** bei der Ermittlung der Rotorlage an die Phasenwicklungen rechteckförmige Spannungsimpulse angelegt werden.

5. Verfahren nach Anspruch 4, **dadurch gekennzeichnet, dass** zeitgleich zum Anlegen der rechteckförmigen Spannungsimpulse eine etwaige relative Änderung der Rotorlage mit einem Sensorelement (5) bestimmt wird.

6. Verfahren nach Anspruch 1 und 2, **dadurch gekennzeichnet, dass** weitere Strom- und/oder Spannungsvektoren in von der aktuellen Rotorlage abweichenden Winkeln eingespeist werden und dass das Maß der relativen Änderung der Rotorlage als Kriterium für die Beurteilung der Freigängigkeit (Lastlosigkeit) der Synchronmaschine (1) verwendet wird.

7. Verfahren zum Betrieb einer Synchronmaschine (1) mit einem permanent erregten Rotor und einem mit Phasenwicklungen versehenen Stator, die mit einer Ansteuerelektronikeinheit (2), die einen Datenspeicher (6) für Rotorlagenwerte aufweist, verbunden ist, wobei ein Auslesen des im Datenspeicher (6) gespeicherten Rotorlagenwertes durchgeführt wird, **dadurch gekennzeichnet, dass** zur Korrektur eines etwaigen Winkelfehlers bei lastloser Synchronmaschine (1) in die Phasenwicklungen mindestens ein Strom- und/oder Spannungsvektor mit definierter Zeitdauer in Richtung der gespeicherten Rotorlage eingespeist wird.

8. Verfahren nach Anspruch 7, **dadurch gekennzeichnet, dass** vor dem Auslesen des im Datenspeicher (6) gespeicherten Rotorlagenwertes überprüft wird, ob der Rotor seit der letzten Speicherung des Rotorlagenwertes mit einer Verdrehsicherung gegen Verdrehen gesichert war.

9. Verfahren nach Anspruch 7 oder 8, **dadurch gekennzeichnet, dass** zeitgleich zur Einspeisung des mindestens einen Spannungs- oder Stromvektors, die relative Änderung der Rotorlage mit einem Sensorelement (5) bestimmt wird und dass das Maß der relativen Änderung der Rotorlage als Kriterium für die Qualität der gespeicherten Rotorlagenwerte verwendet wird.

10. Verfahren nach einem der Ansprüche 1 bis 9, **dadurch gekennzeichnet, dass** der sich durch das Anlegen des Spannungsvektors einstellende Stromvektor mit Hilfe einer Strommesseinrichtung (4) ermittelt wird und als Kriterium für die Beurteilung des Zustandes der elektrischen Anschlüsse der Phasenwicklungen verwendet wird.

## Claims

1. Method for operating a synchronous machine (1) which comprises a permanently excited rotor and a stator provided with phase windings, in which the rotor position is determined,
**characterized in that** for the correction of any possible angular error, with the synchronous machine (1) unloaded, at least one current and/or voltage vector having a defined duration is applied to the phase windings in the direction of the determined rotor position.

2. Method as claimed in claim 1,
**characterized in that** the relative change of the rotor position is determined by means of a sensor element (5) synchronously with the application of the at least one voltage or current vector.

3. Method as claimed in claim 2,
**characterized in that** the relative change is taken into consideration in an additional determination of the rotor position.

4. Method as claimed in any one of claims 1 to 3,
**characterized in that** square-wave voltage pulses are applied to the phase windings when the rotor position is determined.

5. Method as claimed in claim 4,
**characterized in that** any possible relative change of the rotor position is determined by means of a sensor element (5) synchronously with the application of the square-wave voltage pulses.

6. Method as claimed in claims 1 and 2,
**characterized in that** additional current and/or voltage vectors in angles differing from the current rotor position are applied, and **in that** the indicator of the relative change of the rotor position is used as a criterion for judging the ease of motion (no-load condition) of the synchronous machine (1).

7. Method for operating a synchronous machine (1) comprising a permanently excited rotor and a stator provided with phase windings, which is connected to an actuation electronic unit (2) including a data memory (6) for rotor position values, and the rotor position value stored in the data memory (6) is read out,
**characterized in that** for the purpose of correction of a possible angular error, with the synchronous machine (1) unloaded, at least one current and/or voltage vector with a defined duration is applied to the phase windings in the direction of the stored rotor position.

8. Method as claimed in claim 7,
**characterized in that** prior to the reading out of the rotor position value stored in the data memory (6), a check is made whether the rotor was secured against rotation by means of an anti-rotation mechanism since the last storing of the rotor position value.

9. Method as claimed in claim 7 or 8,
**characterized in that** the relative change of the rotor position is determined by means of a sensor element (5) synchronously with the application of the at least one voltage or current vector, and **in that** the indicator of the relative change of the rotor position is used as a criterion for the quality of the stored rotor position values.

10. Method as claimed in any one of claims 1 to 9,
**characterized in that** the current vector which develops due to the application of the voltage vector is determined by means of a current measuring device (4) and is used as a criterion for judging the condition of the electrical connections of the phase windings.

## Revendications

1. Procédé d'exploitation d'une machine synchrone (1) avec un rotor excité en permanence et un stator pourvu d'enroulements de phase, dans laquelle est exécutée une détermination de la position du rotor, **caractérisé en ce que** pour la correction d'un éventuel défaut d'angle avec la machine synchrone (1) à vide, au moins un vecteur de courant et/ou de tension de durée définie est envoyé dans les enroulements de phase, dans le sens de la position déterminée du rotor.

2. Procédé selon la revendication 1, **caractérisé en ce qu'**en même temps qu'est introduit le au moins un vecteur de tension ou de courant, la variation relative de la position du rotor est déterminée au moyen d'un élément de détection (5).

3. Procédé selon la revendication 2, **caractérisé en ce que** la variation relative est prise en compte lors d'une détermination complémentaire de la position du rotor.

4. Procédé selon l'une des revendications 1 à 3, **caractérisé en ce que** des impulsions de tension de forme rectangulaire sont appliquées aux enroulements de phase lors de la détermination de la position du rotor.

5. Procédé selon la revendication 4, **caractérisé en ce qu'**une éventuelle variation relative de la position du rotor est déterminée au moyen d'un élément de détection (5) en même temps que sont appliquées les impulsions de tension de forme rectangulaire.

6. Procédé selon les revendications 1 et 2,
**caractérisé en ce que** des vecteurs de courant et/ou de tension complémentaires sont introduits dans des angles s'écartant de la position actuelle du rotor et **en ce que** la mesure de la variation relative de la position du rotor est utilisée comme critère pour apprécier la liberté de fonctionnement (absence de charge) de la machine synchrone (1).

7. Procédé d'exploitation d'une machine synchrone (1) avec un rotor excité en permanence et un stator pourvu d'enroulements de phase, laquelle est reliée à une unité électronique de contrôle (2) qui comporte une mémoire de données (6) pour des valeurs de position du rotor, une extraction de la valeur de position de rotor mémorisée dans la mémoire de données (6) étant exécutée, **caractérisé en ce que** pour la correction d'un éventuel défaut d'angle avec la machine synchrone (1) à vide, au moins un vecteur de courant et/ou de tension de durée définie est envoyé dans les enroulements de phase, dans le sens de la position mémorisée du rotor.

8. Procédé selon la revendication 7, **caractérisé en ce qu'**il est vérifié, avant l'extraction de la valeur mémorisée de position du rotor dans la mémoire de données (6), si le rotor était protégé contre une rotation avec un blocage en rotation depuis la dernière mémorisation de la valeur de position du rotor.

9. Procédé selon la revendication 7 ou 8, **caractérisé en ce qu'**en même temps qu'est introduit le au moins un vecteur de tension ou de courant, la variation relative de la position du rotor est déterminée au moyen d'un élément de détection (5) et **en ce que** la mesure de la variation relative de la position du rotor est utilisée comme critère pour la qualité des valeurs mémorisées de la position du rotor.

10. Procédé selon l'une des revendications 1 à 9, **caractérisé en ce que** le vecteur de courant qui s'établit par application du vecteur de tension, est déterminé à l'aide d'un dispositif de mesure de courant (4) et utilisé comme critère pour apprécier l'état des connexions électriques des enroulements de phase.
